Europäisches Patentamt

(19) European Patent Office

Office européen des brevets

(11) Publication number: **0 010 845**
**B1**

(12) **EUROPEAN PATENT SPECIFICATION**

(45) Date of publication of patent specification: **20.07.83**

(51) Int. Cl.³: **F 42 B 11/02,** C 08 K 3/30, **F 42 B 31/00**

(21) Application number: **79301859.9**

(22) Date of filing: **10.09.79**

(54) Plastics coated ammunition and method of manufacture.

(30) Priority: **26.10.78 US 955072**

(43) Date of publication of application:
**14.05.80 Bulletin 80/10**

(45) Publication of the grant of the patent:
**20.07.83 Bulletin 83/29**

(84) Designated Contracting States:
**BE DE GB IT LU NL SE**

(56) References cited:
**DE - A - 2 223 477**
**DE - A - 2 313 051**
**DE - A - 2 525 230**
**DE - B - 1 145 963**
**DE - C - 542 750**
**FR - A - 2 142 861**
**GB - A - 531 389**
**US - A - 2 928 348**
**US - A - 3 349 711**
**US - A - 3 356 029**
**US - A - 3 580 178**
**US - A - 3 910 194**

(73) Proprietor: **BANGOR PUNTA CORPORATION**
**1 Greenwich Plaza**
**Greenwich Connecticut 06830 (US)**

(72) Inventor: **Oberg, James L.**
**477 South Street**
**Suffield Connecticut 06078 (US)**
Inventor: **Curran, Roger J.**
**636 Stratford Road**
**Stratford Connecticut 06497 (US)**
Inventor: **Czayka, Michael**
**1905 Souther Blvd**
**N.W., Warren Ohio (US)**

(74) Representative: **Warden, John Christopher et al,**
**R.G.C. Jenkins & Co. 12-15, Fetter Lane**
**London EC4A 1PL (GB)**

Courier Press, Leamington Spa, England

(56) References cited:
**CHEMICAL ABSTRACTS, vol. 76, no. 4, 24th**
**January 1972, page 124, no. 16425x**
**Columbus, Ohio, U.S.A.**

**ENGINEERS DIGEST, vol. 36, no. 10, October**
**1975, pages 13—19**
**London,**
**G. B. F. WÜNSCH: "Solid Lubricants — Theory**
**and Practice"**

**Kunststoff Handbuch, Band VI — Polyamide,**
**Carl Hanser Verlag-München 1966, pp. 248,**
**359, 360, 541, 645**

Plastics coated ammunition and method of manufacture

The present invention relates generally to ammunition and methods of manufacturing ammunition and particularly relates to the treatment of lead bullets to reduce the incidence of toxic lead values in the atmosphere of indoor shooting ranges. The treatment also serves to minimise or eliminate the deposition of lead along the barrel of the firearm and which lead deposition is deleterious to the ballistic characteristics and accuracy of the bullet.

When ammunition, consisting of the conventional lead bullet, is subjected to the heated blast, high pressures and friction within the barrel of a firearm, the bullet usually and undesirably deposits lead along the barrel and its rifling and generally fouls the mechanism of the firearm. Eventually, these lead deposits along the barrel and rifling interfere with the accuracy and ballistic characteristics of the bullet when fired.

It has now been recognised that a more serious problem arises from the use of lead bullets in indoor shooting ranges where vapour and airborne particles of lead create atmospheric toxicity.

Various proposals to minimise or eliminate the tendency of the bullets to deposit lead along the barrel and rifling of the firearm and its mechanism have been proposed and utilised in the past. For example, grease-type lubricants have been applied to bullets. These lubricants have achieved a measure of success in controlling the deposition of lead along the barrel and mechanisms of the firearm. However, such success is achieved at the cost of rendering the bullet difficult to handle as well as creating fouling problems within the firearm of a different kind. For example, present wax or grease coatings can cause fouling if too thinly applied and can cause excessive smoking if too heavily applied. Also, the ballistics of the bullet and particularly its accuracy is affected by the deep lubrication grooving normally required and by gas-cutting that occurs as a result of the effect of bore friction in combination with the hot propellant gases.

Copper alloy coatings have been applied to bullets and these are effective to minimise or prevent fouling of the firearm and the deposition of lead along its barrel. Copper alloy jacketing or half-jacketing is particularly applicable to bullets used in high velocity firearms where it is absolutely necessary to avoid excessive fouling. However, the velocity at which such copper jacketing or half-jacketing is required to achieve that result occurs at velocities similar to those obtainable in modern High performance Magnum (Trade Mark) pistols and revolvers. It will be appreciated that copper alloy jacketed or half-jacketed bullets are expensive to manufacture.

Furthermore, copper-jacketing is insufficiently effective to prevent atmospheric lead toxicity unless the jacketing extends overall, including the rear face in contact with the propellant gases, which is unusual and adds greatly to the expense.

US—A—3 580 178 describes jacketing a bullet with gilding metal and utilising a PTFE polytetrafluoroethylene) lubricant coating on the bullet to bond the jacket to the bullet. The purpose of the lubricant coating is to improve the penetration qualities of the bullet, which is inherently expensive and useful mainly for metal-piercing applications.

Sintered PTFE has also been proposed (US—A—2 928 348) as a lubricant which, when applied to a projectile, deposits in the rifling to maintain a lubricant coating thereon. The PTFE is normally applied as a sintered ring. A very thin (0.6 mil) sintered coating is suggested for steel jacketed bullets and it is recognised that it cannot be applied to lead bullets due to the high fusion temperature. The patent is not concerned with the problem of a cheap treatment for lead bullets to reduce lead emanation and provides no answer to this problem. The coatings are designed to be stripped off the bullets for deposition in the gun barrels.

Another proposal for the use of plastics in the construction of bullets is made in GB—A— 1 396 181. In this case the bullet is composed of injection-moulded carbon-fibre reinforced thermoplastics material. A variation employing a lead core is also disclosed. Since the main purpose of that invention is to produce a special purpose light-weight, high strength bullet, the ballistics would not correspond to those of conventional lead bullets and they could not satisfactorily be used for practice purposes. Their expense would also rule out this application.

Accordingly the invention is aimed at providing low cost ammunition which minimises or eliminates lead distribution in the atmosphere when used in indoor shooting ranges.

According to the invention there is provided ammunition comprising a covered lead bullet characterised in that the bullet is coated with an unprotected film of thickness 1 to 12 mils (25 to 305 $\mu$m) of thermoplastic material comprising not less than 85% by weight of nylon 11, the balance (if any) being selected from solid lubricants, pigments and fillers.

The invention includes a method of manufacturing ammunition as described above by degreasing a lead bullet, heating the bullet to above the fusion point of the thermoplastic material and applying to the bullet a composition in powder form comprising the thermoplastic material, the latter having a fusion point from 250°F to 475°F (121°C to 246°C) and fusing the powder to form a coated film upon the bullet.

The invention also includes a method of reducing the incidence of toxic lead values in the atmosphere of an indoor shooting range resulting from the firing of ammunition comprising lead bullets, characterised by the utilisation in the indoor shooting range of ammunition comprising bullets coated with an unprotected film of thermoplastic material composed predominantly of nylon 11.

The ammunition of the invention, in addition to solving or reducing the toxicity problem mentioned, has the further advantages of minimising lead deposition on the barrel and smoke generation which obscures visibility and impedes aiming occurring in the shooting area.

It also improves bullet expansion characteristics possible in soft unjacketed lead bullets when in high performance and improves terminal ballistics such as bullet expansion characteristics of unjacketed lead bullets.

The loaded round will reduce the pick-up of foreign particles on the surface of the bullet which may score the gun barrel or which may exacerbate would injuries, and it is clean, smooth, and facilitates loading in a weapon.

The bullets are capable of being accurately sized especially at the bullet bearing surface in an ammunition manufacturing operation, and high shooting accuracy can be attained.

The coating material is Nylon 11, which may, but need not include a proportion e.g. up to 5% by weight, of a solid lubricant, preferably molybdenum disulfide.

Preferred forms of the invention are hereafter described.

The preferred ammunition comprises a conventional lead alloy bullet and a dense inherent coating on the bullet, the coating including a thermoplastic composition of molybdenum disulfide and Nylon 11. The molybdenum disulfide constitutes 5% or less of the total composition, with the balance of the composition consisting of Nylon 11. Alternatively, the coating may consist of Nylon 11 per se. The coating is made adherent to the bullet by a thorough cleaning of oils from the surface of the bullet followed by chemical removal of loosely adherent oxides and by chemically stabilising the surface of the bullet. In addition, another agent is preferably applied which is capable of developing a chemically compatible bridge between the stabilising bullet surface and the Nylon 11 coating. In the preferred method the bullet is first vapour-degreased, then it is dipped into a series of tanks which chemically generate an adherent phosphate coating on the bullet. Following the phosphate tanks the bullet is dried and an organic polymeric primer is applied as a thin coating over the phosphated bullet. This coating may be any common primer known in the art to promote adhesion with Nylon 11 such as the phenolic or acrylic-epoxy type primers marked for this purpose. In the preferred method of applying the coating, including either Nylon 11 and molybdenum disulfide composition or Nylon 11 per se, the coating is provided in powder form. The composition including Nylon 11 and molybdenum disulfide is initially mechanically blended. Prior to applying the coating to the bullet, the bullet is heated to or above the fusion point of the polymer, preferably to a temperature at least 425°F (218°C) in the case of Nylon, and the heated bullet is then disposed in the selected powder coating. The thickness of the coating about the bullet is a function of the temperature of the preheated bullet and the thickness of the coating can be controlled in direct proportion to the temperature of the preheated bullet. Also, the preferred method includes subsequently heating the coated bullet to at least 367°F (186°C) to fuse and to densify the selected coating on the lead bullet.

In another method for applying the coating to a bullet, the bullet is prepared for coating by degreasing with a solvent such as perchloroethylene. Thereafter the bullet is preheated e.g. to about 425°F (218°C) and disposed in the selected coating. The bullet then is heated e.g. to at least 367°F (186°C) to fuse and densify the coating on the lead bullet.

An embodiment of the invention is hereafter described with reference to the accompanying drawing in which:—

Figure 1 is a longitudinal cross-sectional view of a bullet constructed in accordance with the present invention with the coating applied; and

Figure 2 is a block diagram illustrating the steps of coating the ammunition in accordance with the present invention.

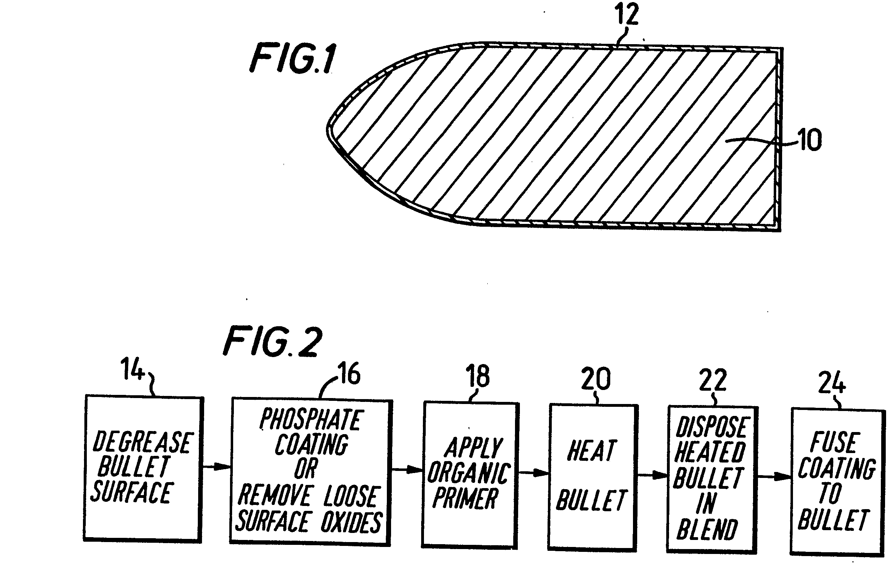

Reference will now be made in detail to the present preferred embodiment of ammunition manufactured in accordance with the present invention as illustrated in Figure 1 of the accompanying drawing.

Referring now to Figure 1, there is illustrated a bullet, generally designated 10, and formed of lead or lead alloy in a conventional manner. About the surface of the bullet and fully encapsulating it, is a polymeric coating 12 of a specified composition and which coating minimises or eliminates lead evolution and deposition along the bore and in the mechanisms of a firearm, not shown, when the bullet is fired from the firearm. Particularly, coating 12 is formed of a composition of molybdenum disulfide and Nylon. The molybdenum disulfide may comprise 5% or less of the total content of the coating composition, with the balance of the composition preferably comprised of the Nylon material. Preferably, however, the molybdenum disulfide consistutes 2—3% of the total coating composition with the balance of the composition being of a Nylon material.

Nylon 11 is the Nylon material used in the composition. It will be appreciated that the entirety of the coating composition is preferably formed of molybdenum disulfide and Nylon 11 within the specified ranges. If desired, the composition may also contain up to 10% pigmentation such as organic or inorganic titanium dioxide, carbon black, chrome yellow, chrome green, a cobalt salt, etc. In lieu of the pigmentation, fillers could be employed up to 10% of the composition. For example, such fillers may include e.g. teflon powder, talc, mica or graphite.

The coating 12 illustrated in Figure 1 is acceptable, when applied within a thickness range from 1 to 12 mils (25 to 305 μm) with the results varying in accordance with the thickness. Preferably, a coating thickness of 3 to 4 mils (75 to 100 μm) on one side, i.e. the bullet diameter plus 3 to 4 mils (75 to 100 μm) on a side or 6 to 8 mls (150 to 200 μm) in toto, has been found to be optimum.

To coat the bullet in accordance with a preferred form of the present invention and referred to Figure 2, lead bullet 10 is first formed in the conventional manner and then degreased as schematically indicated at 14 in Figure 2. For example, a typical degreasing agent such as tri-chloroethylene, methylene chloride, or per-chloroethylene may be utilised for vapour degreasing each bullet. In this manner, impurities of an oily nature on the surface of the lead bullet are removed. A phosphate coating is then applied as indicated at 16 and this coating serves to promote the bonding of the subsequently applied primer coat at 18. Alternatively, the primer coating can be eliminated provided the phosphate coating of the bullet is effective to generate sufficient adhesion with the Nylon 11 or other polymer composition. Also a primer may be applied to the degreased lead bullet after loose oxides are removed by acid treatment such as with sulphuric acid. For example, the primer may comprise a phenolic resin or an acrylic-epoxy resin.

As a further alternative, the bullet may be prepared for coating by vapour degreasing and thereafter heated as described below without application of a phosphate coating or a primer coat.

Molybdenum disulfide and Nylon 11 are provided in powder form and are mechanically blended one with the other with the aforesaid intended ranges of composition such that the subsequent application of the coating to the lead bullet will result in a coating which is uniform in composition along the entire surface area of the bullet. The lead bullet 10 is then heated, as indicated in Figure 2 at 20, preferably to at least 425°F (218°C) or more. As indicated at 22 in Figure 2, the heated bullet is then disposed in the blended molybdenum disulfide and Nylon 11 powder composition. The blend is maintained agitated by vibrators or by tumbling during the bullet contact. The coating thickness on the lead bullet is a function of the temperature of the bullet when disposed in the blend of molybdenum disulfide and Nylon 11 powder. A minimum thickness coating for example on the order of 1—2 mils (25 to 50 μm) is achieved by preheating the lead bullet to approximately 425°F (218°C). If a thicker coating is desired, for example a coating of approximately 12 mils (305 μm), the bullet is heated to approximately 500°F (260°C). Thus, preheating the bullet to temperatures intermediate 425°F (218°C) and 500°F (260°C) achieves a corresponding coating thickness.

If desired, after the coating has been deposited on the lead bullet, the coated bullet may be reheated to at least 367°F (186°C) (24 in Figure 2) in order to fuse and to densify the molybdenum disulfide and Nylon 11 coating on the lead bullet.

The molybdenum disulfide and Nylon 11 powder may also be applied to the lead bullet electrostatically or by means of a fluidised bed. However, the above-described method of applying the coating is the preferred method.

In another embodiment of the invention, a coating of Nylon 11 is applied to the bullet. The bullet is prepared for coating by preparing the bullet surface in one of the alternative methods described above. Thereafter the bullet is preheated to about 425°F (218°C) and disposed in powder Nylon 11. The bullet is then heated to at least 367°F (186°C) to fuse and densify the coating on the lead bullet.

At least in the case of certain high pressure rounds such as a .357 Magnum (Trade Mark) round, it is desirable to roughen the surface of the bullet by knurling or other abrading in order to improve adherence of coating to bullet during firing. When bullets are fired at pressures of up to 40,000 psi (2812 kg/sq.cm.) there is substantial flexing of the bullet as it enters the gun barrel and there is a marked tendency for the bullet to stretch and elongate. Roughening the bullet surface through knurling and the like retards the tendency of the coating to stretch with respect to the bullet surface. Without such roughening, the coating would tend to wipe from the surface of such high pressure rounds.

The Nylon 11-based thermoplastic coating compositions applied by fusion should have a fusion point no higher than 600°F (306°C) and preferably between 250°F (121°C) and approximately 475°F (240°C). That is, the coating fusion point should be below the corresponding lead or lead alloy bullet melting temperature which ranges from about 486°F (252°C) to about 621°F (327°C). If desired, lubricating agents alternative to molybdenum disulfide, such as graphite, PTFE powder, mica, and the like may be added in quantities up to 5% to aid lubricity of the coating.

**Claims**

1. Ammunition comprising a covered lead bullet characterised in that the bullet (10) is coated with an unprotected film (12) of thickness 1 to 12 mils (25 to 305 μm) of thermoplastic material comprising not less than 85% by weight of nylon 11, the balance (if any) being selected from solid lubricants, pigments, and fillers.

2. Ammunition according to claim 1 wherein the lead bullet (10) has a rough surface.

3. Ammunition according to claim 1 or claim 2 wherein said coating (12) completely encapsulates the entirety of said bullet.

4. Ammunition according to any preceding claim including a layer formed of a phosphate material between said bullet and said coating.

5. Ammunition according to any preceding claim wherein the coating comprises up to 5% by weight of a solid lubricant.

6. Ammunition according to claim 5 wherein the lubricant comprises molybdenum disulfide.

7. Ammunition according to any preceding claim, wherein said coating consists solely of molybdenum disulfide and nylon 11.

8. A method of manufacturing ammunition according to claim 1 characterised by degreasing a lead bullet (10), heating the bullet to above the fusion point of the thermoplastic material and applying to the bullet a composition in powder form comprising the thermoplastic material, the latter having a fusion point from 250°F to 475°F (121°C to 246°C) and fusing the powder to form a coated film (12) upon the bullet (10).

9. A method according to claim 8 wherein the heated bullet is disposed in the powder and thereafter further heated to fuse the powder as a coating.

10. A method according to claim 8 or claim 9 wherein the composition comprises nylon 11 together with up to 5% by weight of a solid lubricant.

11. A method according to claim 10 wherein the lubricant comprises molybdenum disulfide.

12. A method according to any of claims 8 to 11 wherein the bullet is heated prior to applying the coating to a temperature of at least 425°F (218°C).

13. A method according to claim 12 wherein the coated bullet is heated to a temperature of at least 367°F (186°C) to fuse the coating to the bullet.

14. A method according to any of claims 8 to 13 wherein the lead bullet is first roughened prior to being treated.

15. A method according to any of claims 8 to 14 wherein a phosphate layer is applied to the lead bullet before the coating is applied.

16. A method according to claim 15 wherein an organic primer is applied over the phosphate layer.

17. A method according to claims 8 to 16 wherein said coating is applied so as to completely encapsulate the bullet.

18. A method of reducing the incidence of toxic lead values in the atmosphere of an indoor shooting range resulting from the firing of ammunition comprising lead bullets, characterised by the utilisation in the indoor shooting range of ammunition comprising lead bullets (10) coated with an unprotected film (12) of thermoplastic material composed predominantly of nylon 11.

**Revendications**

1. Munition comprenant une balle de plomb revêtue, caractérisée en ce que la balle (10) est revêtue d'une pellicule non protégée (12) d'une épaisseur de 0,001 à 0,012 pouce (25 à 305 μm) d'une matière thermoplastique comprenant non moins de 85% en poids de Nylon 11, le reste (éventuel) étant choisi parmi les lubrifiants solides, les pigments et les charges.

2. Munition suivant la revendication 1, dans laquelle la balle de plomb (10) a une surface rugueuse.

3. Munition suivant la revendication 1 ou 2, dans laquelle le revêtement (12) encapsule complètement la balle.

4. Munition suivant l'une quelconque des revendications précédentes, comprenant une couche d'une matière phosphatée formée entre la balle et le revêtement.

5. Munition suivant l'une quelconque des revendications préécédentes, dans laquelle le revêtement comporte jusqu'à 5% en poids d'un lubrifiant solide.

6. Munition suivant la revendication 5, dans laquelle le lubrifiant comprend du disulfure de molybdène.

7. Munition suivant l'une quelconque des revendications précédentes, dans laquelle le revêtement consiste uniquement en disulfure de molybdène et Nylon 11.

8. Procédé de fabrication d'une munition suivant la revendication 1, caractérisé par le dégraissage d'une balle de plomb (10), le chauffage de la balle jusqu'au-delà du point de fusion de la matière thermoplastique et l'application, sur la balle, d'une composition en poudre comprenant la matière thermoplastique, celle-ci ayant un point de fusion de 250°F à 475°F (121°C à 246°C) et la fusion de la poudre pour la formation d'une pellicule d'enrobage (12) sur la balle (10).

9. Procédé suivant la revendication 8, dans lequel la balle chauffée est déposée dans la poudre et est ensuite chauffée à nouveau pour faire fondre la poudre à l'état de revêtement.

10. Procédé suivant la revendication 8 ou 9, dans lequel la composition comprend du Nylon 11 avec jusqu'à 5% en poids d'un lubrifiant solide.

11. Procédé suivant la revendication 10, dans lequel le lubrifiant solide comprend du disulfure de molybdène.

12. Procédé suivant l'une quelconque des revendications 8 à 11, dans lequel la balle est chauffée avant l'application du revêtement jusqu'à une température d'au moins 425°F (218°C).

13. Procédé suivant la revendication 12, dans lequel la balle revêtue est chauffée jusq'à une température d'au moins 367°F (186°C) pour faire fondre le revêtement sur la balle.

14. Procédé suivant l'une quelconque des revendications 8 à 13, dans lequel la balle de plomb est d'abord rendue rugueuse avant d'être traitée.

15. Procédé suivant l'une quelconque des revendications 8 à 14, dans lequel une couche de phosphate est appliquée sur la balle avant l'application du revêtement.

16. Procédé suivant la revendication 15, dans lequel un primaire organique est appliqué sur la couche phosphatée.

17. Procédé suivant les revendications 8 à 16, dans lequel le revêtement est appliqué de manière à encapsuler complètement la balle.

18. Procédé pour réduire la concentration en agent plombifère toxique dans l'atmosphère d'un stand de tir en local fermé résultant du tir de munition comprenant des balles de plomb, caractérisé par l'utilisation dans les stands de tir en local fermé de munitions comprenant des balles de plomb (10) revêtues d'une pellicule non protégée (12) d'une matière thermoplastique formée principalement de Nylon 11.

**Patentansprüche**

1. Munition, umfassend ein umhülltes Bleigeschoß, dadurch gekennzeichnet, daß das Geschoß (10) mit einem ungeschützten, 1 bis 12 mils (25 bis 305 μm) dicken Film (12) aus thermoplastischem Werkstoff umhüllt ist, der aus nicht weniger als 85 Gew.-% Nylon-11 besteht, wobei ein eventuell vorhandener Rest aus festen Gleitstoffen, Farbstoffen und Füllstoffen ausgewählt ist.

2. Munition nach Anspruch 1, dadurch gekennzeichnet, daß das Bleigeschoß (10) eine rauhe Oberfläche hat.

3. Munition nach Anspruch 1 oder 2, dadurch gekennzeichnet, daß die Umhüllung (12) vollständig das gesamte Geschoß kapselartig einschließt.

4. Munition nach einem der vorangehenden Ansprüche, gekennzeichnet durch eine Schicht aus Phosphatwerkstoff, die sich zwischen dem Geschoß und der Umhüllung befindet.

5. Munition nach einem der vorangehenden Ansprüche, dadurch gekennzeichnet, daß die Umhüllung bis zu 5 Gew.% eines festen Gleitstoffes enthält.

6. Munition nach Anspruch 5, dadurch gekennzeichnet, daß der Gleitstoff Molybdändisulfid enthält.

7. Munition nach einem der vorangehenden Ansprüche, dadurch gekennzeichnet, daß die Umhüllung nur aus Molybdändisulfid und Nylon-11 besteht.

8. Verfahren zur Herstellung der Munition nach Anspruch 1, dadurch gekennzeichnet, daß ein Bleigeschoß (10) entfettet und bis zum Schmelzpunkt des thermoplastischen Werkstoffes erwärmt wird und auf das Geschoß ein Gemenge in Pulverform aufgebracht wird, das den thermoplastischen Werkstoff beinhaltet, dessen Schmelzpunkt im Bereich von 250°F bis 475°F (121°C bis 246°C) liegt, und daß das Pulver zur Bildung eines Hüllfilmes (12) auf dem Geschoß (10) geschmolzen wird.

9. Verfahren nach Anspruch 8, dadurch gekennzeichnet, daß das erwärmte Geschoß in das Pulver gebracht wird und anschließend weiter erwärmt wird, um dieses zu einer Umhüllung zu schmelzen.

10. Verfahren nach Anspruch 8 oder 9, dadurch gekennzeichnet, daß das Gemenge zusammen mit bis zu 5 Gew.-% eines festen Gleitstoffes Nylon-11 umfaßt.

11. Verfahren nach Anspruch 10, dadurch gekennzeichnet, daß der Gleitstoff Molybdändisulfid umfaßt.

12. Verfahren nach einem der Ansprüche 8 bis 11, dadurch gekennzeichnet, daß das Geschoß vor dem Aufbringen der Umhüllung auf eine Temperatur von mindestens 425°F (218°C) erwärmt wird.

13. Verfahren nach Anspruch 12, dadurch gekennzeichnet, daß das umhüllte Geschoß auf eine Temperatur von mindestens 367° F (186°C) erwärmt wird, um die Umhüllung auf das Geschoß zu schmelzen.

14. Verfahren nach einem der Ansprüche 8 bis 13, dadurch gekennzeichnet, daß das Bleigeschoß vor der Behandlung aufgerauht wird.

15. Verfahren nach einem der Ansprüche 8 bis 14, dadurch gekennzeichnet, daß vor dem Aufbringen der Umhüllung eine Phosphatschicht auf das Bleigeschoß aufgebracht wird.

16. Verfahren nach Anspruch 15, dadurch gekennzeichnet, daß über der Phosphatschicht eine organische Grundierschicht aufgebracht wird.

17. Verfahren nach Anspruch 8 bis 16, dadurch gekennzeichnet, daß die Umhüllung derart aufgebracht wird, daß sie vollständig kapselförmig das Geschoß umschließt.

18. Verfahren zur Verminderung toxischer Bleiwerte in der Atmosphäre einer geschlossenen Schießanlage, die sich aus dem Verschießen von Munition, die Bleigeschosse umfaßt, ergeben, gekennzeichnet durch die Verwendung von Munition, die Bleigeschosse (10) umfaßt, die mit einem ungeschützten Film (12) aus thermoplastischem Werkstoff, der hauptsächlich aus Nylon-11 besteht, umhüllt sind, in der geschlossenen Schießanlage.

*FIG.1*

12

10

*FIG.2*

| 14 | 16 | 18 | 20 | 22 | 24 |
|---|---|---|---|---|---|
| DEGREASE BULLET SURFACE | PHOSPHATE COATING OR REMOVE LOOSE SURFACE OXIDES | APPLY ORGANIC PRIMER | HEAT BULLET | DISPOSE HEATED BULLET IN BLEND | FUSE COATING TO BULLET |